# EUROPEAN PATENT APPLICATION

(11) **EP 2 028 490 A1**
(43) Date of publication of application: **25.02.2009**
(21) Application number: 07114745.8
(22) Date of filing: 22.08.2007
(51) Int. Cl.: G01N 33/543

(54) **A device for, an arrangement for and a method of analysing a sample**

(71) Applicant: Koninklijke Philips Electronics N.V., 5621 BA Eindhoven (NL)
(72) Inventor: The designation of the inventor has not yet been filed
(74) Representative: Van Velzen, Maaike Mathilde

(57) **Abstract**

A device (100) for analysing a sample, the device (100) comprising a beam sensitive structure (101) adapted such that an electric property of a portion of the beam sensitive structure (101) is locally modified by a beam (102) impinging on the portion of the beam sensitive structure (101), and a sample accommodating unit (103) adapted for accommodating the sample, wherein the beam sensitive structure (101) and the sample accommodating unit (103) are arranged such that the local modification of the electric property of the portion of the beam sensitive structure (101) locally modifies the analysis of the sample in a corresponding portion of the sample accommodating unit (103), wherein the beam sensitive structure (101) comprises an organic photoconductor.

## Description

### FIELD OF THE INVENTION

The invention relates to a device for analysing a sample.

Moreover, the invention relates to an arrangement for analysing a sample.

The invention further relates to a method of analysing a sample.

### BACKGROUND OF THE INVENTION

A biosensor may be a device for the detection of an analyte that combines a biological component with a physicochemical or physical detector component.

Chiou, PY, Ohto, AT, Wu, MC (2005) "Massively parallel manipulation of single cells and microparticles using optical imaging", Nature, Vol. 436, pp. 370 to 372 discloses an optical image-driven dielectrophoresis technique that permits high-resolution patterning of electric fields on a photoconductive surface for manipulating single particles.

Dholakia, K (2005) "Optoelectronic tweezers", Nature materials, Vol. 4, pp. 579 to 580 discloses that a low-power light image projected on a photoconductive layer can initiate non-uniform electric fields over a large area, and allow the manipulation and sorting of particles without wires and electrodes.

WO 2000/14515 discloses a bio-molecule analyzer including a plurality of test sites on a transparent substrate, each test site having probe molecules attached thereto. An array of addressable light sources are positioned in optical alignment with a corresponding test site. A solution containing sample molecules is positioned in contact with the plurality of test sites. A detector array having a plurality of photodetectors is positioned in optical alignment with the array of addressable light sources, one photodetector corresponding to each light source, and a light filter is positioned between the detector array and the plurality of test sites for absorbing the light from the light sources and transmitting the light from the test sites to the detector array.

However, due to a complex addressing scheme according to which the biosensor is addressed, the costs for conventional biosensors may be high.

### OBJECT AND SUMMARY OF THE INVENTION

It is an object of the invention to provide a sample analysis system which can be manufactured in a cheap manner.

In order to achieve the object defined above, a device for analysing a sample, an arrangement for analysing a sample, and a method of analysing a sample according to the independent claims are provided.

According to an exemplary embodiment of the invention, a device for analysing a sample is provided, the device comprising a beam sensitive structure adapted such that an electric property of a portion of the beam sensitive structure is locally modified by a beam impinging on the portion of the beam sensitive structure, and a sample accommodating unit adapted for accommodating the sample, wherein the beam sensitive structure and the sample accommodating unit are arranged such that the local modification of the electric property of the portion of the beam sensitive structure locally modifies an analysis property of the sample in a corresponding portion of the sample accommodating unit.

According to another exemplary embodiment of the invention, an arrangement for analysing a sample is provided, the arrangement comprising a device having the above mentioned features and a beam generating unit adapted for generating the beam impinging on the portion of the beam sensitive structure of the device.

According to still another exemplary embodiment of the invention, a method of analysing a sample is provided, the method comprising impinging (or directing) a beam on a portion of a beam sensitive structure which is adapted such that an electric property of the portion of the beam sensitive structure is locally modified by the impinging beam, providing the sample in a sample accommodating unit, and arranging the beam sensitive structure and the sample accommodating unit such that the local modification of the electric property of the portion of the beam sensitive structure locally modifies an analysis property of the sample in a corresponding portion of the sample accommodating unit.

In the context of this application, the term "sample" may particularly denote any solid, liquid or gaseous substance to be analysed, or a combination thereof. For instance, the substance may be a liquid or suspension, furthermore particularly a biological substance. Such a substance may comprise proteins, polypeptides, nucleic acids, lipids, carbohydrates or full cells, etc.

The term "beam sensitive structure" may particularly denote any material, particularly shaped as a layer, which has the property to be influenced selectively by an impinging beam regarding the electrical properties of the beam sensitive structure. In other words, when the beam hits a portion of the beam sensitive structure, the electrical behavior of the illuminated portion will be different from the electrical behavior of non-illuminated portions of the beam sensitive structure.

The term "electric property" may particularly denote an ohmic resistance (or an electrical conductivity), an impedance, a capacitance, an inductivity, etc. Particularly, when a photoconductor is illuminated by light, the ohmic resistance may be reduced.

The term "analysis property" may particularly denote a property being relevant for the analysis of the (fluidic) sample, like a physical property (for instance charge induced attraction or repelling, or a concentration), a chemical property (for instance a pH value), a biological property (for instance biological activity),etc.

The term "beam" may particularly denote a laterally limited bundle of photons or particles or acoustic waves having a specific propagation direction. Such a beam may be a light beam, an electron beam, an acoustic beam, an ultrasonic beam. The only requirement is that the beam should be capable to initiate an interaction with the beam sensitive structure which characteristically alters the electric properties of the beam sensitive structure.

The term "beam generating unit" may particularly denote a beam source like a laser or an X-ray tube or an ultrasonic sound source or an electron source.

The "substrate" may be made of any suitable material, like glass, plastics, or a semiconductor. According to an exemplary embodiment, it may be advantageous to provide a substrate which is partially or (essentially) entirely transmissive for the beam. For example, when using a light beam, a glass substrate may be an appropriate choice. The term "substrate" may be thus used to define generally the elements for layers that underlie a layer or portions of interest. Also, the "substrate" may be any other base on which a layer is formed, for example a glass or metal layer. According to an exemplary embodiment of the invention, a beam may be used to illuminate a corresponding beam sensitive layer in such a manner that the beam impinging on a specific portion of this layer selectively and locally modifies the electrical properties, particularly the electrical conductivity, of the beam sensitive layer. Therefore, addressing a substrate with a (for instance optical) beam may be made possible, thereby allowing to omit expensive electric addressing components conventionally provided in a substrate (for instance as integrated circuit components. The substrate may require few contact wires or if photovoltaic layers are included then no wires at all are required. Therefore, the substrate can be manufactured with less effort, and the addressing scheme can be made very effectively, since optical beams (or other kind of beams like electron beams) may be controlled easily and with high precision. Therefore, capabilities and resources may be shifted from a (biosensor) substrate to an external control unit, thereby allowing to provide a dispensable component. Therefore, the dispensable component may be manufactured cheaply, and a multiple use component (like an external addressing device) can include the more expensive components.

Conventionally, a fast inorganic photoconductor material may be used in combination with a (high frequency) alternating current so as to promote dielectrophoresis of neutral particles. In contrast to this, exemplary embodiments of the invention implement organic photoconductor which can be designed to be much slower regarding their electrical response to illumination by a light beam. In other words, when an organic photoconductor is illuminated, a corresponding change of its electric conductivity may last significantly longer as compared to a traditional inorganic photoconductor. In case of a too quick response an applied voltage is only present during the illumination. The light source and the voltage must be present simultaneously at any location to couple the voltage into the sample volume at said location.. A relatively slow response characteristic allows an organic photoconductor to work properly for addressing portions of a biochip, even to address multiple locations on a biochip simultaneously with one light source. This advantageous property of the organic photoconductor may be used according to exemplary embodiments of the invention to modify the voltage in the sample for relatively long periods of time, even with a short optical light pulse. This enables applications like the transport of charged molecules. In addition to this, organic photoconductor materials are relatively cheap since wet processing is possible with these materials. Furthermore, the electrodes bounding such an organic photoconductor may be driven with DC voltages which may be simpler as compared to AC voltages.

Consequently, it is possible to get rid of driving particles via permanent electrically conductive lines, and expensive photolithography may be made dispensible. Temporary "virtual" electrode structures may be created where needed. A size reduction of electrode structures may be made possible since a beam may be provided with a small cross sectional area. This may allow to manipulate particles like DNA, cells, proteins, etc., in a microfluidic device under the influence of an electric force. In such a fluidic device, a sample may be supplied via an inlet and may be drained via an outlet. Between the inlet and the outlet, fluidic structures (like channels formed in a substrate, valves, taps etc.) may be provided.

Thus, exemplary embodiments of the invention may allow for an optical addressing of a low cost disposable bio-cartridge. According to an exemplary embodiment of the invention, a method to significantly reduce the price of a bio-chip or lab-on-a-chip for use in molecular diagnostics is provided, involving separating the method of addressing the chip from the low cost sample carrier. The sample carrier does not necessarily need to contain any active electronic components (like transistors), but instead may contain a means to receive optical signals from a cartridge/biochip analyzer (for instance a bench-top machine, or a handheld device). The optical receiver in the sample carrier may be in the form of an unstructured organic photoconductor layer whose resistance can be locally lowered via illumination by a light modulating device, for instance a scanning laser. A time dependent voltage pattern can be optically written into the sample carrier from the cartridge analyzer via illumination of the photoconductor. This voltage profile can be used to manipulate (for instance transport, mix) charged biological particles electrokinetically or for any other means that require a spatially varying voltage pattern.

The beam may also be used to heat a layer with a negative temperature coefficient of resistance. The material of the layer may be selected from the group consisting of manganese oxide, nickel oxide, cobalt oxide, iron oxide, copper oxide, titanium oxide, a semiconductor material, and a doped semiconductor material. It may be desired that a lab-on-a-chip cartridge is disposable, for instance to avoid cross-contamination of samples.

There are several bio-chemical tests available with very low cost. For example, the detection of pregnancy may be achieved via the detection of a specific protein in the urine. Whilst there are other diagnostic tests which may be more expensive than this it is generally true that the disposable cartridge should be as cheap as possible. While the integration of the components onto one substrate may reduce the cost as compared to traditional assays it will remain a significant price due to the amount of processing required to define the structures on the substrate. If the number of mask steps can be either reduced or entirely avoided then this would advantageously reduce the cost of the disposable.

According to an exemplary embodiment of the invention, it is possible to incorporate an organic photoconductor layer into a sample carrier to allow the detection of an optical signal from the cartridge analyzer (for instance bench top machine, handheld reader/device). The optical signal may locally reduce the resistance of the organic photoconductor in the cartridge and may result in a voltage pattern, being defined via the applied light pattern. This voltage pattern may create an electric field in the sample (for instance fluid) compartments/channels which can be used for a variety of means related to the movement of the bio-particles.

Next, further exemplary embodiments of the device will be explained. However, these embodiments also apply to the arrangement and to the method.

The device may comprise a substrate, wherein the beam sensitive structure may be formed on the substrate (directly or with one or more intermediate layers in between). For instance, the substrate may have a planar surface on which a layer of the beam sensitive structure (for instance a photoconductor) can be deposited or applied. This may allow for a cheap and simple configuration using standard deposition procedures, like chemical vapour deposition (CVD), atomic layer deposition (ALD), sputtering or spinning/spraying/printing in the case of wet processing.

The beam sensitive structure may be a non-patterned layer formed on the substrate. In other words, the beam sensitive structure may be a continuous layer. This allows to deposit the beam sensitive structure or layer in a single deposition procedure without the need to subsequently carry out an expensive patterning process like photolithography and etching.

Alternatively, the beam sensitive structure may be a patterned layer formed on the substrate. By patterning the beam sensitive layer, the spatial resolution of the system may be improved. Such a patterning can be carried out using a single lithographic and etching procedure, and may therefore be performed with a reasonable effort. Alternatively, the patterning may be realized as a result of a printing process for a wet processed layer.

The substrate may be transparent for the beam. Particularly, the substrate may be optically transparent and may be made, for instance, of glass or plastics. When the substrate is transparent, the beam may transmit the substrate essentially without being damped or absorbed.

The substrate may be a spinning disk. According to such a configuration, the substrate may be rotatable which may allow to keep the beam generating unit (for example in the form of a one dimensional array of beams) spatially fixed and to move the substrate for scanning the latter. Alternatively, a single beam configured to scan in a direction at an angle to the direction of disk rotation may be considered. Then, by rotating the disk and by directing an optical beam on the rotatable disk, rings of the spinning disk may be selected to have other electrical properties than surrounding portions. Alternatively, by pulsing the beams only smaller portions of the disc surface will be selected to have other electrical properties than surrounding portions.

The device may comprise an electrically conductive structure between the substrate and the beam sensitive structure, wherein the electrically conductive structure may be transparent for the beam. Such an electrically conductive structure may allow to supply electrical signals, for instance a supply voltage, to the beam sensitive structure, for example for influencing charged particles of the sample. An example for such an optically transparent electrically conductive structure is ITO (indium tin oxide).

The beam sensitive structure may be adapted such that an ohmic resistance (R) of the portion of the beam sensitive structure is locally modified by the beam impinging on the portion of the beam sensitive structure. By modifying the ohmic resistance or the electrical conductivity, the voltage divison across the beam sensitive structure and a sample chamber may be selectively used for manipulating charged particles in such a space. Such particles may be DNA molecules or may be proteins. Therefore, such particles may be moved in accordance with a scanning scheme defined by the optical beam.

The beam sensitive structure may be adapted such that the electrical property of the portion of the beam sensitive structure is locally (that is to say only in the illuminated portion) modified by the beam, wherein the beam may be a beam of electromagnetic radiation, a beam of optical light, an electronic beam, or a beam of a mechanical wave. According to an exemplary embodiment, an optical beam may be used, for example generated by a laser or a Light Emitting Diode (LED). This may have the advantage that a monochromatic and spatially limited beam is generated with a sufficiently high intensity. However, alternatively it is also possible to direct an electron beam, a proton beam, or any other beam of charged particles onto the surface for locally modifying the electrical conductivity.

The beam sensitive structure may be a photoconductor, particularly an organic photoconductor. The term "photoconductor" may particularly denote a material which changes its value of the ohmic resistance or electrical conductivity under the influence of optical radiation. Examples for such materials are trinitrofluorenone or dilithium phthalocyanine in a PVK (polyvinyl carbazole) matrix. However, other materials may be used as well.

The device (particularly the substrate) may be free of any active electronic component. The term "active electronic component" may particularly denote any electronic member (for instance monolithically integrated) which does actively control electrical circuitry features, like transistors, logic gates or the like. The substrate may be free of any of such electronic components so that the substrate can be manufactured with low costs which makes the device particularly appropriate for disposable systems. A part of or all of the electronic components may be shifted from the optically addressable device to an external scanning unit which may be used for a longer time. Therefore, the system can be manufactured in an economic manner.

The device may comprise a voltage supply unit (like a voltage source) adapted to apply a voltage between the beam sensitive structure and a counter electrode, wherein the sample accommodating unit may be positioned between the beam sensitive structure and the counter electrode. Thus, in a gap between the beam sensitive structure and the counter electrode, a sample chamber may be located. By such a geometrical configuration, it is possible to generate an electric field in the sample chamber which is selectively modified by the beam impinging the beam sensitive structure. In other words, when the beam is absent, a voltage drop occurs essentially entirely over the beam sensitive layer. In another configuration, in which a beam is impinging the beam sensitive structure, the voltage drop may occur essentially entirely in the sample, thereby influencing electrically charged components of the sample by a corresponding electric field. This may allow to move, concentrate, accumulate, or repel such charged particles within the sample chamber. Therefore, the device may be used as some kind of molecule transportation device.

If the voltage applied to the device is oscillated at high frequency then non-charged particles may be manipulated via dielectrophoresis. Applying a direct current (DC) or a direct voltage to the device may be preferred over applying an alternating current (AC) or an alternating voltage to the device, since a relatively stable voltage drop may allow for applications like molecule or cell transport.

The device may comprise a biocompatible coating separating the sample accommodating unit from the beam sensitive structure. The term "biocompatible" may particularly denote a material property of the coating that the coating material does not harm biological molecules or systems analyzed as a sample. An example of such a coating is a hydrogel, e.g. polyacrylamide. Such a coating may be omitted when the organic photoconductor layer (which is an exemplary embodiment for the beam sensitive structure) is made of a biocompatible material itself.

The device may be adapted for at least one of the group consisting of sensing (for instance biological) particles (that is detecting the presence of particles qualitatively or quantitatively), performing lab-on-chip applications, performing electrophoresis, performing sample transport (that is to say move particles within the device), performing sample mixing (that is to say mixing two or more components, for instance for triggering chemical reactions), cell lysing, sample washing, sample purification (for example protein purification), initiating polymerase chain reactions (PCR), or performing hybridization analysis (that is to say initiating interactions between molecules to be detected and immobilized capturing molecules).

Next, further exemplary embodiments of the arrangement will be explained. However, these embodiments also apply to the device and to the method.

The arrangement may comprise a control unit adapted for controlling the beam generating unit in accordance with a predefined sample analysis protocol. Such a control unit may be, for example, a microprocessor or a CPU (central processing unit) and may allow to centrally control operation of the device and/or the beam generating unit. The sample analysis protocol may be defined by a user, for example via an input interface. Alternatively, such a sample analysis protocol may be an automated procedure capable of analyzing a sample in a predefinded manner. For example, in a lab-on-chip application, the control unit may centrally control all the individual procedures to be performed in such a lab-on-chip. This may include mixing components, transporting components along a substrate, accumulating components as specific portions of a substrate, etc.

The beam generating unit may be adapted to scan the beam sensitive structure. For example, a scannable laser may be used which allows to generate a high light intensity in a spatially limited beam. By scanning the beam, the electrically conductive portions of the beam sensitive structure may be spatially moved as well, which allows to apply any desired spatial addressing pattern to the sample.

The beam generating unit may be adapted to generate the beam having a variable intensity. By varying the intensity, the value of the electrical conductivity may be varied as well. This may allow to vary an amplitude and a polarity of the force exerted on charged particles in the sample. For instance, by changing the polarity of the voltage, an attracting or a repelling force may be generated. This may allow to transport the molecules efficiently in each desired direction.

The beam generating unit may be adapted to generate the beam having a plurality of non-contiguous beam portions. In other words, the beam generating unit may itself generate an optical beam having different portions or representing a pattern of isolated sub-beams. This may allow to refine the spatial accuracy of the molecule motion scheme.

The arrangement may comprise a beam patterning member positioned between the beam generating unit and the beam sensitive structure and adapted to pattern the beam. According to such a configuration, any conventional laser beam or the like may be used which is then patterned by a patterned member having transparent and opaque portions.

The arrangement may comprise a beam focusing member positioned between the beam generating unit and the beam sensitive structure and adapted to focus or translate the beam. Such a beam focusing member can be a lens, for example a lens having a variable focal lens. Such a lens may be a liquid crystal lens, may be a fluid lens, or may be a solid lens.

The aspects defined above and further aspects of the invention are apparent from the examples of embodiment to be described hereinafter and are explained with reference to these examples of embodiment.

### BRIEF DESCRIPTION OF THE DRAWINGS

The invention will be described in more detail hereinafter with reference to examples of embodiment but to which the invention is not limited.
Fig. 1 illustrates an arrangement according to an exemplary embodiment of the invention.
Fig. 2 is a schematic cross-section of an optical addressing device for optically addressing bio particles according to an exemplary embodiment of the invention.
Fig. 3 shows a schematic cross-section of a sample and of a device according to an exemplary embodiment of the invention.
Fig. 4 shows what happens when a voltage is applied to electrodes of Fig. 3 in the presence of only little light.
Fig. 5 shows what happens when a voltage is applied to electrodes of Fig. 3 and light is illuminated which results in a movement of charged particles.
Fig. 6 to Fig. 8 illustrate a sequence of images showing the migration of DNA under the influence of an applied electrical field, wherein the dark bands are DNA depleted regions and the light bands are DNA enriched regions.
Fig. 9 schematically shows a laser intensity as a function of time, wherein the centre of the laser bundle is fixed during this operation.
Fig. 10 shows a resulting two-dimensional electric field profile obtainable by the procedure of Fig. 9.
Fig. 11 shows a pattern of a shadow mask to generate a radial electric field.
Fig. 12 is a schematic depiction of moving a charged particle via scanning a laser beam over a photoconductor.
Fig. 13 shows a definition of potential islands on the surface of the photoconductor.
Fig. 14 shows a photograph of a sample patterned with a linear electrode array along the long axis of the page (electrodes covered with hydrogel).
Fig. 15 shows (a) Voltages applied to bio-chemical sample, (b) position of bio-chemical sample
Fig. 16 shows the end position as a function of ramp time

### DESCRIPTION OF EMBODIMENTS

The illustration in the drawing is schematical. In different drawings, similar or identical elements are provided with the same reference signs.

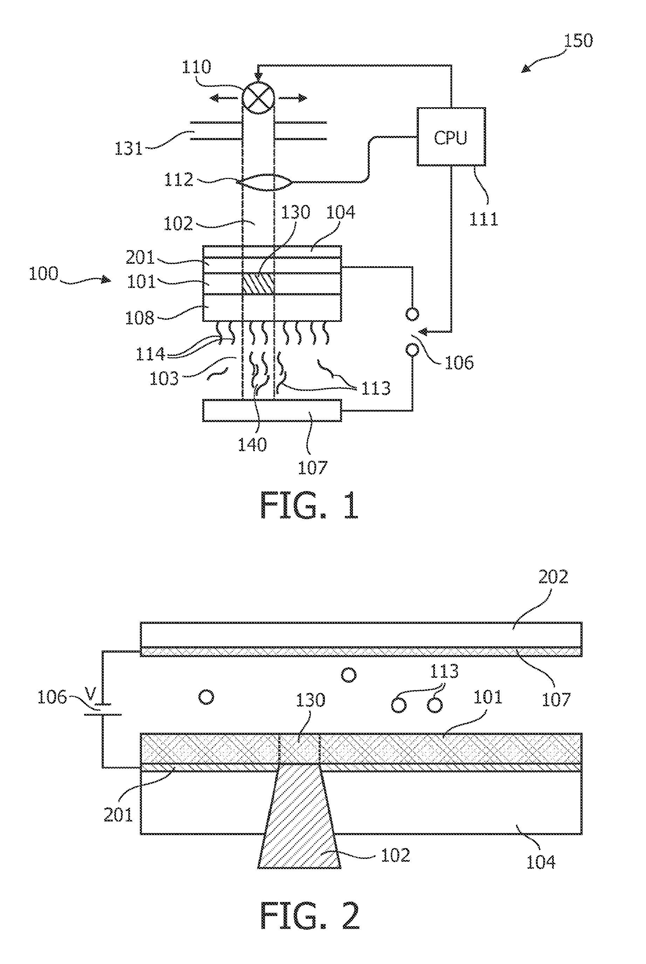

In the following, referring to Fig. 1, an arrangement 150 of analyzing a sample according to an exemplary embodiment of the invention will be explained.

The arrangement 150 comprises a device 100 for analyzing the sample which will be described in the following in more detail. Furthermore, a laser or LED 110 forming a beam generating unit is provided for generating a light beam 102 impinging on a portion 130 of a photoconductor layer 101 of the device 100.

In more detail, the device 100 comprises the photoconductor layer 101 as a beam sensitive structure adapted such that an electrical conductivity of the illuminated portion 130 of the photoconductor layer 101 is locally modified by the optical beam 102 impinging on the respective portion 130 of the photoconductor layer 101.

Furthermore, a sample accommodating unit 103, particularly a sample chamber, is provided for accommodating a sample, for instance a biological sample to be analysed. In the present scenario, charged particles 113 of the sample are shown. The charged particles 113 may be DNA molecules which can, if they are complimentary to capture molecules 114 immobilised on a surface of a coating or immobilization layer 108, bind to the capture molecules 114 by hybridisation.

As can be taken from Fig. 1, the beam sensitive structure 101 and the sample accommodating unit 103 are arranged such that the local modification of the electrical conductivity of the portion 130 of the photoconductor layer 101 locally modifies the analysis of the sample in a corresponding portion 140 of the sample accommodating unit 103. In other words, when the laser 110 emits a light beam 102 and this light beam 102 impinges on the portion 130 of the photoconductor layer 101, the ohmic resistance is locally lowered in this specific portion 130 as compared to surrounding portions of the layer 101.

When a voltage supply unit 106 now generates an electric voltage to be applied between a conductive layer 201 (arranged between substrate 104 and photoconductor 130) and a counter electrode 107, then, locally in the portion 140 corresponding to the illuminated portion 130, the voltage drop of this voltage takes place particularly in the spatially assigned portion 140. More particularly, the surface of the photoconductor 101 in the beam 102 has a well defined voltage but the volume 140 below this area is not necessarily "vertical" as drawn in the schematic view of Fig. 1. In reality, the volume in the sample area 140 would be more bell-shaped. Consequently, an attracting (or repelling, depending on the polarity of the voltage and the charge type of the charged molecules 113) electric force is generated to attract the molecules 113 to be accumulated in a corresponding region 140 and thus close to the capture molecules 114. Therefore, the initiation of hybridization events may be promoted to accelerate the analysis.

More precisely, the device 100 comprises a glass substrate 104 on which an electrode layer 201 is formed and on top of this, a photoconductor layer 101. In the present embodiment, the photoconductor layer 101 is a non-patterned continuous layer formed on the glass substrate 104. Since the substrate 104 is made of glass, it is transparent for the optical beam 102 allowing to use essentially the complete intensity of the beam 102 for the modification of the electrical conductivity in the portion 130.

Since the optical addressing of the selected portions 130 of the device 100 is defined via the external electromagnetic radiation source 110, it is possible to manufacture the substrate 104 without any active integrated circuit components, like FETs. This may allow to manufacture the device 100 with low cost.

The voltage supply unit 106 is adapted to supply a voltage (for instance 60 Volt) between the conductive layer 201 and the counter electrode 107 (which may be made of ITO, indium tin oxide, an electrically conductive and optically transparent material). The sample accommodating unit 103 is the volume between the photoconductor layer 101 and the counter electrode 107. The counter electrode 107 does not necessarily have to be situated directly opposite to the substrate 104 containing the photoconductor 101. It may be remote or even integrated on the same substrate 104 as the photoconductor 101 (though preferably not covered with photoconductor material).

Optionally, the biocompatible coating layer 108 may be provided on the layer 101 separating the sample accommodating unit 103 from the beam sensitive structure 101. This may allow to detect even sensitive biomolecules without the danger of a deterioration of the measurement or of the sample. Although not shown in Fig. 1, also the counter electrode 107 may be covered with a biocompatible coating, if necessary. The biocompatible layer 108 may be a hyrogel material into which hybridisation sites can be easily incorporated by UV cross-linkage or streptavidin-biotin linkage.

When the laser 110 illuminates the portion 130 of the device 100, and when the voltage supply unit 106 simultaneously applies a voltage between the electrodes 101, 107, a voltage drop across the sample occurs only in the central portion 140 of the sample chamber 103 in which, as can be taken from Fig. 1, the majority of the molecules to be detected 113 are therefore accumulated. This may allow to promote a specific interaction between the capture molecules 114 located close to the selected portion 130 on the one hand and the molecules 113 on the other hand. This may allow to accelerate the measurement.

An aperture 131 is provided which ensures that the beam 102 generated by the laser 110 is laterally restricted to a specific spatial extension. Furthermore, a lens 112, which can be controlled by the CPU 111 as well, is shown which may have an adjustable focal length. This may allow to accurately adjust the optical properties of the system 150 in accordance with requirements of a specific measurement. Furthermore, the system may be adapted so that the beam may scan relative to the sample.

Next, the design of an optically addressable cartridge 200 according to an exemplary embodiment of the invention will be explained in more detail.

The structure is simple and shown in schematic cross-section in Fig. 2.

First a continuous layer 201 of a transparent conductor (for instance a transparent conductive oxide such as ITO) is deposited on a transparent (for instance glass) substrate 104. Secondly, an unstructured photoconductor material 101 is deposited (such as trinitrofluorenone or dilithium phthalocyanine in PVK) on the ITO (preferably, the photoconductor is bio-compatible). On the top (inside) surface of a sample carrier 202 (which may be integrally formed with the substrate 104), a second conducting layer 107 is deposited. This may also be transparent, but alternatively a non-transparent conductor (for instance metal) can be used.In fact it is often preferable to have one of the electrodes made from a reflective metal. If the illumination is through the bottom substrate then the electrode on the inner side of top substrate should be metal. This will reflect unabsorbed light back through the photoconductor a second time and increase its effective sensitivity. Conversely if illumination is from the top a reflective electrode under the photoconductor on the bottom substrate would also increase the effective sensitivity of the photoconductor.

In a simple embodiment (see later), all layers are non-structured and so no photolithography is required. The sample carrier 202 may be thus extremely low cost. Preferably the photoconductor 101 is engineered to have a much lower resistance than that of the liquid (sample) when it is illuminated and a much higher resistance when it is not. This means that when a voltage V is applied between the top conductor 107 and the bottom conductor 201 (only two electrical contacts may be sufficient) the applied voltage V will fall either over the photoconductor 101 (no illumination) or over the sample (illumination). If the sample contains charged particles 113 such as DNA or proteins (which are not at their isoelectrical point), then the voltage drop over the sample may create an electrical field which may, depending on the particle 113 charge and polarity of the field, either collect or repel the particles 113.

A bio-compatible coating or stack of bio-compatible coatings (not shown in Fig. 2) may be applied on top of the photoconductor 101 and/or top conductor 107. The properties (for instance thickness, conductivity) of the bio-compatible coating may be such that it does not substantially influence the proposed principle of optical addressing, i.e. the voltage drop over this bio-compatible coating should not prohibit obtaining the desired voltage drop over the wet sample (for instance fluid). This may be satisfied by a hydrogel layer.

In the following, optical addressing of charged particles 113 according to an exemplary embodiment of the invention will be explained.

In order to show that charged particles 113 can be moved with the concept of illuminating a photoconductor 101, an experiment with non-biological particles was performed where the stack design was slightly different from that in Fig. 2.

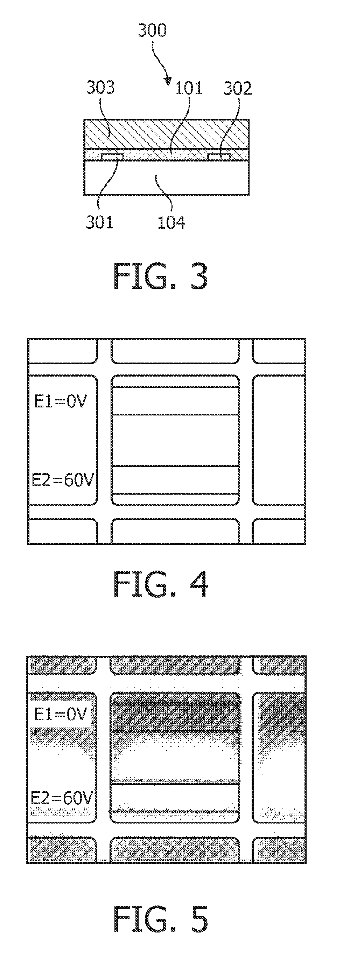

As can be taken from the cross section of a device 300 shown in Fig. 3, rather than having two vertical electrodes the investigated system has two horizontal electrodes 301, 302. A sample 303 is shown as well in Fig. 3.

In Fig. 4, the voltage applied between the two electrodes 301, 302 is 60 V but the photoconductor 101 is exposed to little light and so (essentially) all the voltage is dropped over the photoconductor 101. The particles therefore are dispersed through the volume via Brownian motion.

When, however, the photoconductor 101 is illuminated the voltage is dropped over the sample 303 and the positively charged particles move to the electrode held at ground potential (0V), see Fig. 5.

This illustrates that light addressing can be used to manipulate charged particles.

Next, electrically induced movement of DNA will be explained.

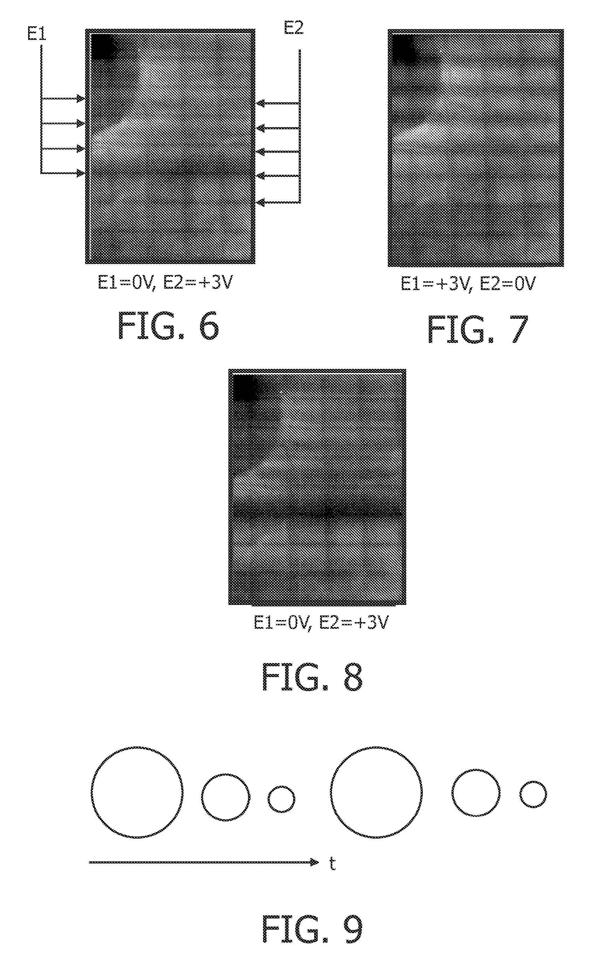

DNA fragments (*E. coli*) were labeled with fluorescent dye and placed in the same sample structures as shown in Fig. 3 but without the photoconductor layer 101. Voltages were applied to the electrodes and movement of the DNA particles 113 was observed. This can be observed in Fig. 6 to Fig. 8 where the voltage polarity is reversed between each image.

In Fig. 6 to Fig. 8, the matrix of black lines is a pixel structure while the thick horizontal light and dark bands are areas of enriched and depleted DNA, respectively. This result illustrates that charged biological particles (for instance DNA in a PCR solution) can be manipulated via electrical fields.

The dark patch top left in Fig. 6 to Fig. 8 is a sample fault. The grid structure in Fig. 6 to Fig. 8 results from an encapsulation layer. Relevant structures are electrodes which run as lines across the sample from left to right in Fig. 6 to Fig. 8 and connect on the left hand side (E1) and right side (E2). In the described embodiment, the electrodes are comb shaped electrodes which are intermeshed. One point (which is indeed hard to see in Fig. 6 to Fig. 8) is that the intensity of the fluorescent particles may be highest on the line of E1 (Fig. 7) and E2 (Fig. 8).

According to an exemplary embodiment of the invention, a method for pulling charged particles towards a substrate is provided comprising capturing molecules (for instance DNA strands, anti-bodies) and therefore increasing the chance of a target molecule coming in contact with a capture molecule and hybridizing. This may be achieved simply by holding the light source (a laser spot) at a constant position where the capture molecule layer is situated. This causes a vertical field to be present due to a local decrease in the resistance of the photoconductor layer and, given the correct voltage polarity, this will result in molecules of a given charge being attracted to the surface. By reversing the voltage the stringency of bonded molecules can be tested by changing the voltage or the light intensity. In this embodiment the particles only feel a vertical field component so there is no horizontal focusing effect. It may even be possible to use the same laser beam that is being used to excite the fluorescent signal to activate the photoconductor to precipitate this vertical force. If this is done, it may be advantageous to use a fluorescent marker with a large Stokes shift and chose a photoconductor that does not absorb the fluorescent signal.

According to an exemplary embodiment of the invention, a horizontal focusing of charge particles can be achieved by various methods. One method is to place a lens with variable focal length (for instance liquid crystal or fluid-focus) in the laser bundle. It should be arranged so that the beam is brought to focus with the laser on and then the laser is switched off. The lens is then defocused before the laser is switched on again and refocused.

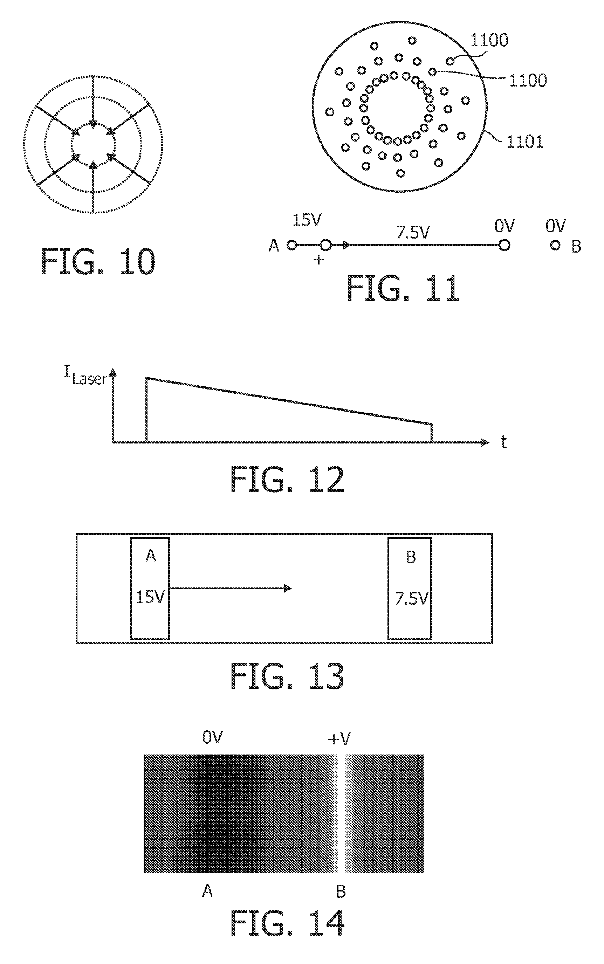

Such an embodiment is illustrated in Fig. 9 and is repeated over and over again. It results in a circular distribution of voltage over the surface of the photoconductor and a field distribution directed towards the centre of the laser beam, see Fig. 10. Due to this field distribution particles will migrate towards the centre where a (molecular) capture site can be located.

According to an exemplary embodiment of the invention, rather than defocusing the laser beam, particles can be horizontally focused with a homogeneous light source via a built in shadow mask. This may require patterning of an optical blocking layer in the sample carrier. The optical blocking layer can be patterned using photolithography or printed on the substrate.

The form of such a layer can be seen in Fig. 11 and basically this has the effect of creating a radial variation in light dosage for the photoconductor by varying the aperture(s) 1100. An opaque portion is denoted with reference numeral 1101. It does not necessarily have to be the number of apertures 1100 which varies radially as in Fig. 11 as the diameters could also be varied as one move towards the centre.

An advantage of this embodiment is that it is no longer necessary to be able to locally modulate the light source and therefore a side-light or back-light (or other light-guide geometries) can be used.

According to an exemplary embodiment of the invention, alternatively rather than using a shadow mask, a pixellated light source, such as an OLED display, could be located in the analyzer to generate a light pattern which will be incident on the photoconductor in the cartridge. This may require placing a GRIN lens between the display and the cartridge to avoid parallax. The light pattern may be redefineable from the software.

According to an exemplary embodiment of the invention, if the resolution of the laser beam allows it, and the beam can be scanned, then a light distribution profile and therefore the voltage profile can simply be written in by scanning the laser and modulating the laser amplitude or dwell time so as to expose the photoconductor more at the centre of the focus area than at the edges. This may also result in a radial field and movement of particles.

In the previous embodiments it has been described how charged particles can be focused or moved (in a vertical direction). It may, however, also be interesting to be able to move particles laterally from one location to another. Such movement has been demonstrated above and in that case was achieved by patterning horizontal electrodes which are held at different potentials. By applying voltages directly into the sample volume and/or by illuminating a photoconductor, a lateral electrical field will be caused which results in particle transportation. Both of these concepts require different potentials to be applied to electrodes and therefore many electrical connections and photolithography are required. It is, however, possible to avoid this when using a scanning laser.

In such a case, the sample as shown schematically in Fig. 2 may be used, i.e. no structured electrode surfaces. When charged particles are to be moved from position A to B (as is illustrated in Fig. 12), then the laser should be scanned from A to B and the intensity of the laser should vary during the period that the laser is tracing the path. For the case of a linear response from the photoconductor then the laser intensity (or pulse period) should vary linearly to give a homogenous field distribution from A to B. Due to the long RC-time this field distribution will typically remain for a period of 0.5 sec. to 1 sec. after scanning and this may be sufficient to transport particles. If however this is not the case the scan may be repeated. The gradient of the laser intensity when moving between A and B may also be zero. In which case, the photoconductor has to respond quickly to changes in light intensity in order to allow particles to follow the beam.

The path A-B does not need be a straight line and it is independent of the sample carrier and system. It is purely determined by the path of the laser beam which can be controlled by software. It can therefore be programmed differently for different assays. This can also be achieved via a pixellated light source.

In the previous embodiments, charged particles are essentially "dragged" with the laser beam. It is, however, possible to just define areas of different voltage on the surface of the photoconductor and allow the particles to move to the relevant areas under the induced electrical field.

For example, considering Fig. 13, the laser can be scanned over areas A and B of the sample. When over area A the laser power could be at full power and so cause the whole of area A to form an equipotential with the bottom electrode. Area A would then be, say 15V. In Area B the laser power could be at half and so Area B would be at a lower voltage (say 7.5V). The potential difference between these "virtual electrodes" would result in particle movement.

This may in fact be appropriate for electrophoresis (free solution or gel) as the device is no longer constrained to having two (physical electrodes) at the ends of the bath with a linear E-field between them. Any E-field distribution can be assigned depending on the species of interest.

If a high resolution voltage profile is desired then it may be beneficial to laterally structure the photoconductor to prevent excessive horizontal conduction. This may involve one mask step to divide the photoconductor into an array of isolated islands. Alternatively electrodes can be defined on the surface of the photoconductor.

Due to the fact that there are only two voltage contacts necessary optical addressing is also attractive for lab on disk where a spinning disk is used. Two slip contacts can be made to the disk and via the laser the voltage profile defined.

Fig. 14 shows a photograph of a sample patterned with a linear electrode array along the long axis of the page (electrodes covered with hydrogel). A DC voltage has been applied between electrodes A (-ve) and B (+ve). A sample containing fluorescently labeled E-coli DNA has been placed above the electrodes and as can be seen the DNA collects above electrode B.

Several methods are disclosed below to address and drive the optically addressable micro-fluidic devices (such as shown in Figs. 1 and 2), for application in for example a bio-chip or lab-on-a-chip for use in molecular diagnostics. The method uses light (for example a scanning laser beam or LED) to address the device, thereby separating the method of addressing the biochip analyser from the low cost sample carrier. The sample carrier does not contain any active electronic components (e.g. transistors) but instead contains a means to receive optical signals from a cartridge/biochip analyser (e.g. bench-top machine, handheld device). The optical receiver in the sample carrier is in the form of a photoconductor layer whose resistance can be locally lowered via illumination by a light modulating device, e.g. a scanning laser, a LED with beam manipulation, a series of LEDs with beam adaptation or a parallel light modulator such as a Liquid Crystal Display. By using methods of driving, which methods comprise combinations of steadily increasing/decreasing voltage ramps and/or rapidly changing voltages, the correct time dependent voltage pattern can be optically written into the sample carrier from the cartridge analyser via illumination of the photoconductor. Preferably the photoconductor is an organic photoconductor. When an organic photoconductor is illuminated, a corresponding change of its electric conductivity may last significantly longer as compared to an inorganic photoconductor.

In the embodiments of the devices according to the invention described above suitable capacitive and resistive properties of the (organic) photoconductor and sample layers have to be chosen as well as the associated driving approaches.

The devices comprise a thin organic photoconductor layer in series with a much thicker biological sample. For example, with a 400 µm thick biological sample (standard for a miniaturized PCR chamber) and a 1µm photoconductor. For such layers the capacitance ratio is 1:15 and consequently when a voltage is applied across the stack then the voltage is capacitively divided and therefore is dropped over the lowest capacitance: the biological sample. This occurs even in the absence of light and results in all charged biological particles experiencing a force from the applied voltage even when this is not intended. In effect any local definition of virtual electrodes via the light pattern is over-ruled by the capacitive voltage division.

Also the resistance area product of the biochemical sample and of the organic photoconductor in the dark state and in the illuminated state are very different. These resistances and capacitances (determined by the thickness) need to be tailored to the application. The criteria for this optimisation, which form the preferred embodiments of the devices according to this invention are:
1. The capacitance of the biological sample should be much lower than that of the organic photoconductor.
2. The bio-sample is a low resistance, so the resistance of the organic photoconductor should be very high.
3. The resistance of the organic photoconductor should be larger than that of the biological sample when not illuminated and lower when illuminated.

The reasons for these choices are:
1. If the capacitance of the biological sample is much lower than that of the organic photoconductor then a sharp increase in the applied voltage leads to capacitive splitting of the voltage over the two layers. This results in the majority of the voltage being dropped across the biological sample. This allows bio-molecules in the sample to be moved even in the absence of a light signal providing that a voltage pulse is applied. Applications of this type of driving approach would be to simultaneously move all particles in a sample towards one of the substrates, for example to move unbound particles away from an array of capture probes in order to increase specificity of the device. Alternatively, it may be desirable to repeatedly move particles backwards and forwards across the device for example to first remove unbound particles from the vicinity of a capture site in the array, but then to move particles back towards the array to provide a further chance to attach to another capture probe (for example in a different part of the array) using an oscillating block voltage, again without the presence of light.
2. The very high resistance of the system creates an extremely large RC time (in excess of a 1 s). A consequence of this is; if a short light pulse of say 1 ms is applied to the organic photoconductor then the induced charge at the interface is present for a much longer period of time. Thus the addressing dwell time can be much shorter than the time require to move the bio-molecules in the biological sample. The addressing time can be as short as 0.1 ms. In this manner, it is possible to independently move many particles at different positions in the device at the same moment using for example only a single light source, such as a scanning laser.
3. This condition means that when a light pulse is applied the resistance drop across the organic photoconductor is much less than that across the biological sample. Since the voltage is locally applied to the biological sample the motion of the individual particles is determined. If the voltage is increased over the device slowly enough the voltage is divided via the resistances of the layers (the dark state resistance for the organic photoconductor) and the majority of the voltage (unless illuminated) is dropped across the organic photoconductor.

Due to the first criteria above, an oscillating block voltage can be applied across the biological sample and organic photoconductor which results in the particles being repeatedly moved back and forth with respect to an array of capture sites situated on the organic photoconductor. By using capacitive coupling there is no need for flooding the sample with light. This is advantageous as flood-lighting would result in bleaching of any photo-dyes attached to biological particles.

If the shaking voltage waveform, as described above, is terminated with the polarity which repels the bio-particles (a negative voltage for DNA) being applied to the electrode under the photoconductor then non-captured particles from the biological sample move away from the array of capture probes (as required). This removes background signal.

After applying a voltage we then have to reduce to zero volts in such a way as to avoid a too large voltage drop over the biological sample, i.e. the voltage cannot simply be removed as this will result in C-coupling and the unbound particles in the biological sample will move back towards the array. We can avoid this happening by choosing a sufficiently low gradient (dV/dt) that ensures that the voltage is split resistively.

This gradient is no greater than 0.75 V/s for the values of capacitance and resistance given previously.

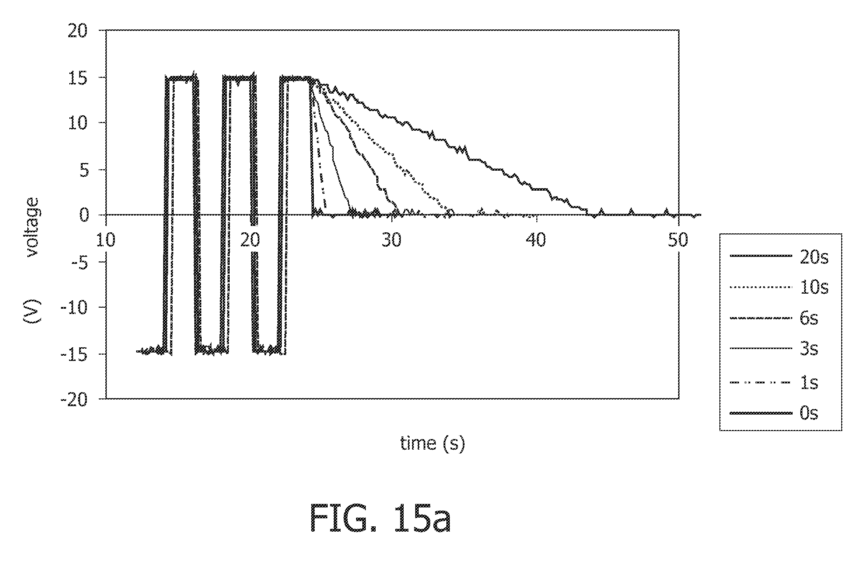

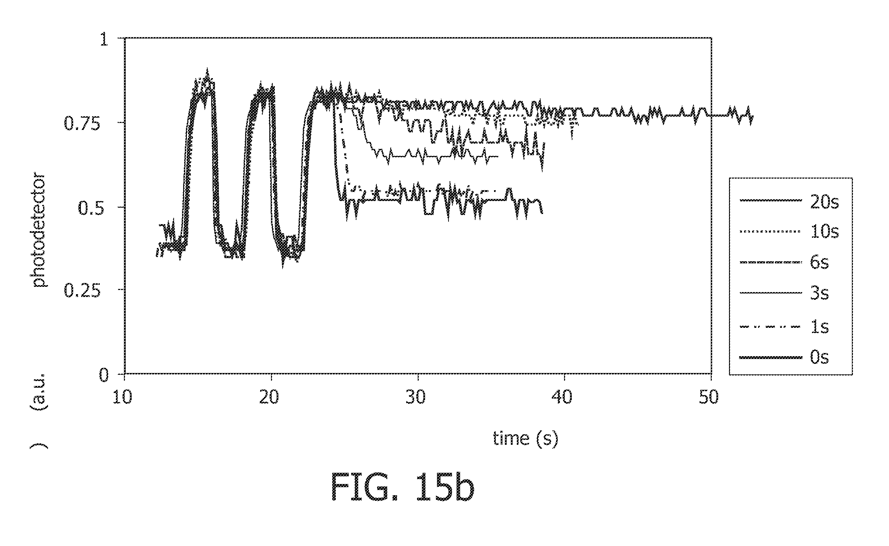

In Figs 15(a) and 15(b) experimental results show the movement of a sample (in this case small bead particles) across an optically addressed device to variable ramp times (varied between 0 and 20s). In this example, the resistance area product of the photoconductor is 10MΩm² in the dark state and 10kΩm² in the illuminated state. The RA product of bio-chemical sample is (depends on the exact nature of sample) 200kΩm².

In Fig. 15(a) the applied voltage to the sample is shown while Fig. 15(b) shows the measured position across an optically addressed device (measured by the change in optical state). With a ramp of 15 V in 20 s (0.75 V/s) the position of the particles is preserved (the particles always have a slight change in position after switching, for example due to a Brownian motion).

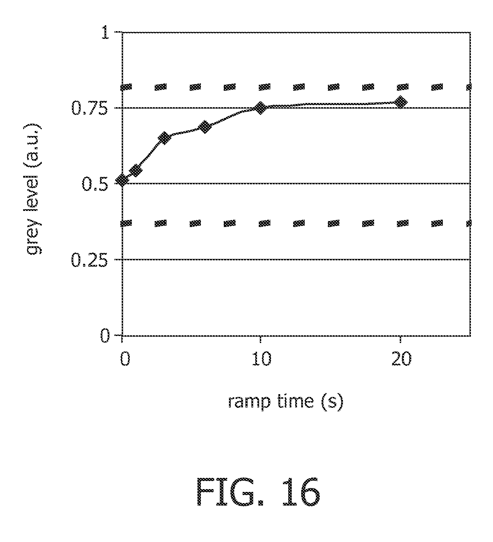

In Fig. 16 the end position of the particles versus the ramp time is shown.

It should be noted that the term "comprising" does not exclude other elements or features and the "a" or "an" does not exclude a plurality. Also elements described in association with different embodiments may be combined.

It should also be noted that reference signs in the claims shall not be construed as limiting the scope of the claims.

## Claims

1. A device (100) for analysing a sample, the device (100) comprising
a beam sensitive structure (101) adapted such that an electric property of a portion of the beam sensitive structure (101) is locally modified by a beam (102) impinging on the portion of the beam sensitive structure (101);
a sample accommodating unit (103) adapted for accommodating the sample;
wherein the beam sensitive structure (101) and the sample accommodating unit (103) are arranged such that the local modification of the electric property of the portion of the beam sensitive structure (101) locally modifies an analysis property of the sample in a corresponding portion of the sample accommodating unit (103);
wherein the beam sensitive structure (101) comprises a photoconductor.

2. A device (100) of claim 1, wherein the photoconductor is an organic photoconductor.

3. The device (100) of claims 1 or 2,
comprising a substrate (104), wherein the beam sensitive structure (101) is formed on the substrate (104).

4. The device (100) of claim 3,
wherein the beam sensitive structure (101) is a non-patterned layer formed on the substrate (104).

5. The device (100) of claim 3,
wherein the beam sensitive structure (101) is a patterned layer formed on the substrate (104).

6. The device (100) of claim 4,
wherein the substrate (104) is transparent for the beam (102).

7. The device (100) of claim 3,
wherein the substrate (104) is a spinning disk.

8. The device (200) of claim 3,
comprising an electrically conductive structure (201) provided between the substrate (104) and the beam sensitive structure (101).

9. The device (200) of claim 8,
wherein the electrically conductive structure (201) is transparent for the beam (102).

10. The device (200) of claim 8,
wherein the electrically conductive structure (201) is a continuous layer.

11. The device (200) of claim 8,
wherein the electrically conductive structure (201) is structured so that different components of the structured electrically conductive structure (201) are attachable to different voltages.

12. The device (100) of claims 1 or 2,
wherein the beam sensitive structure (101) is adapted such that an ohmic resistance of the portion of the beam sensitive structure (101) is locally modified by the beam (102) impinging on the portion of the beam sensitive structure (101).

13. The device (100) of claims 1 or 2,
wherein the beam (102) is one of the group consisting of a beam of electromagnetic radiation, a beam of optical light, a particle beam, an electron beam, and a beam of a mechanical wave.

14. The device (100) of claims 1 or 2,
comprising a layer with a negative temperature coefficient of resistance.

15. The device (100) of claim 3,
wherein the substrate (104) is free of any active electronic component.

16. The device (100) of claim 3,
comprising a photovoltaic cell integrated onto the substrate (104).

17. The device (100) of claim 8,
comprising a counter electrode (107) and comprising a voltage supply unit (106) adapted to apply a voltage, particularly a direct voltage, between the electrically conductive structure (201) and the counter electrode (107), wherein the sample accommodating unit (103) is positioned between the beam sensitive structure (101) and the counter electrode (107).

18. The device (100) of claims 1 or 2,
comprising a biocompatible coating (108) arranged for separating the sample accommodating unit (103) from the beam sensitive structure (101).

19. The device (100) of claims 1 or 2,
adapted as a disposable device.

20. The device (100) of claims 1 or 2,
adapted as at least one of the group consisting of a sensor device, a biosensor device, a biochip, a lab-on-chip, an electrophoresis device, a sample transport device, a sample mix device, a cell lysing device, a sample washing device, a sample purification device, a polymerase chain reaction device, and a hybridization analysis device.

21. The device of claims 1 or 2, wherein the capacitance of the photoconductor is higher than the capacitance of the sample.

22. The device of claims 1 or 2, wherein the resistance of the photoconductor in the dark state is higher than 1 MΩ/m².

23. The device of claims 1 or 2, wherein the resistance of the photoconductor is larger than that of the sample when not illuminated and lower when illuminated.

24. An arrangement (150) of analysing a sample, the arrangement (150) comprising
a device (100) according to claims 1 or 2;
a beam generating unit (110) adapted for generating the beam (102) impinging on the portion of the beam sensitive structure (101) of the device (100).

25. The arrangement (150) of claim 24,
comprising a control unit (111) adapted for controlling the beam generating unit (110) in accordance with a predefined sample analysis protocol.

26. The arrangement (150) of claim 24,
wherein the beam generating unit (110) is adapted to scan the beam sensitive structure (101) in accordance with a predefined sample analysis protocol.

27. The arrangement (150) of claim 24,
wherein the beam generating unit (110) is adapted to generate the beam (102) having a variable intensity.

28. The arrangement (150) of claim 24,
wherein the beam generating unit (110) is adapted to generate the beam (102) having a plurality of non-contiguous beam portions.

29. The arrangement (150) of claim 24,
comprising a beam patterning member positioned between the beam generating unit (110) and the beam sensitive structure (101) and adapted to pattern the beam (102) to have a plurality of non-contiguous beam portions.

30. The arrangement (150) of claim 24,
comprising a beam focusing member (112) positioned between the beam generating unit (110) and the beam sensitive structure (101) and adapted to focus the beam (101).

31. The arrangement of claim 24, comprising a voltage unit (106) for applying a sharp increase in the voltage to allow simultaneous movement of particles in the sample.

32. The arrangement of claim 24, comprising a voltage unit (106) for applying a steadily increasing or decreasing voltage ramp so that the majority of the voltage drops across the photoconductor when not illuminated.

33. The arrangement of claim 32, wherein the increase or decrease in voltage ramp is less than 0.75V/s

34. A method of analysing a sample, the method comprising
impinging a beam (102) on a portion of a beam sensitive structure (101) which is adapted such that an electric property of the portion of the beam sensitive structure (101) is locally modified by the impinging beam (101);
providing the sample in a sample accommodating unit (103);
arranging the beam sensitive structure (101) and the sample accommodating unit (103) such that the local modification of the electric property of the portion of the beam sensitive structure (101) locally modifies an analysis property of the sample in a corresponding portion of the sample accommodating unit (103);
wherein the beam sensitive structure (101) comprises a photoconductor.

35. The method of claim 34, wherein the photoconductor is an organic photoconductor.

36. The method of claims 34 or 35,
comprising at least one of the group consisting of moving electrically charged particles (113) of the sample along a predetermined trajectory under the influence of the locally modified electric property of the portion of the beam sensitive structure (101), and accumulating electrically charged particles (113) of the sample under the influence of the locally modified electric property of the portion of the beam sensitive structure (101).
